# FASCICULE DE BREVET EUROPEEN

(11) **EP 4 306 386 B1**
(45) Date de publication et mention de la délivrance du brevet: **23.04.2025**
(21) Numéro de dépôt: 23184494.5
(22) Date de dépôt: 10.07.2023
(51) Int. Cl.: B62B 15/00, B62B 17/06, B62B 17/08

(54) **LUGE GONFLABLE**
AUFBLASBARER SCHLITTEN
INFLATABLE SLED

(30) Priorité: 13.07.2022 FR 2207206
(43) Date de publication de la demande: 17.01.2024
(73) Titulaire: Decathlon, 59650 Villeneuve d'Ascq (FR)
(72) Inventeur: BONNFOUS, Jean-Baptiste, 59650 Villeneuve d'Ascq (FR); BOUSCH, Thomas, 59650 Villeneuve d'Ascq (FR); SEGUIN, Arthur, 59650 Villeneuve d'Ascq (FR); MAILLARD, Octavien, 59650 Villeneuve d'Ascq (FR)
(74) Mandataire: Sayettat, Julien Christian

(56) Documents cités:
- DE-U1- 20 215 554
- US-A1- 2003 020 248
- US-B1- 6 637 552

## Description

L'invention concerne une luge gonflable permettant la pratique d'une activité ludique, notamment pour permettre à au moins un utilisateur de glisser sur un terrain neigeux.

Les luges gonflables peuvent être facilement compactées lorsqu'elles ne sont pas utilisées, ce qui permet d'en faciliter le transport et/ou le stockage, par exemple dans le coffre d'une voiture. En outre, une luge gonflable présente un poids réduit par rapport aux luges en bois ou en plastique, ce qui facilite d'autant plus son transport.

De telles luges comprennent un matelas pneumatique qui présentent une paroi inférieure agencée pour permettre leur glisse sur un terrain neigeux, une paroi supérieure agencée pour permettre l'assise sur elle d'au moins un utilisateur, ainsi qu'une paroi périphérique reliant lesdites parois inférieure et supérieure.

Pour permettre à un utilisateur assis sur la paroi supérieure de contrôler ses déplacements, certaines de ces luges gonflables sont équipées d'au moins un système de freinage comprenant un levier formant un patin inférieur actionné par une poignée supérieure, ce levier étant monté en rotation dans un boîtier entre une position inactive, dans laquelle le patin est rétracté vers le boîtier, et une position de freinage par tirage sur la poignée par l'utilisateur pour faire saillir ledit patin de la paroi inférieure et lui permettre ainsi de venir frotter contre le sol.

En particulier, on connaît des luges gonflables avec deux systèmes de freinage disposés symétriquement de part et d'autre d'un plan sagittal médian de ladite luge, l'utilisateur actionnant sélectivement au moins l'une des poignées pour effectuer un freinage et/ou tourner.

Pour pouvoir ranger de façon compacte la luge dégonflée, il est préférable de pouvoir démonter les systèmes de freinage dans la mesure où leur boîtier est rigide.

Le document US-6 637 552 décrit une luge gonflable dont le matelas comprend deux cavités symétriques qui débouchent chacune dans les parois supérieure et inférieure dudit matelas, et qui sont agencées pour recevoir chacune de façon réversible un système de freinage à levier.

Pour utiliser la luge, l'utilisateur doit disposer le matelas dégonflé à plat sur le sol, en plaçant chaque système de freinage dans respectivement une cavité. Puis, lors du gonflage du matelas, chaque cavité épouse la paroi périphérique du boîtier de freinage correspondant, afin de maintenir par friction le système de freinage en son sein.

Cette solution ne donne pas entière satisfaction, en ce qu'elle s'avère complexe à mettre en œuvre, tant pour la confection du matelas pneumatique que pour le montage des systèmes de freinage pour pouvoir utiliser la luge.

En outre, la disposition des systèmes de freinage au travers la paroi de glisse ne permet pas de contrôler de façon optimale les déplacements de la luge, et nécessite la présence d'évidements dans ladite paroi qui peuvent altérer ses performances de glisse.

L'invention vise à perfectionner l'art antérieur en proposant notamment une luge gonflable dont le matelas pneumatique est équipé d'au moins un système de freinage qui peut être monté et démonté de façon simple et intuitive, et ce tout en optimisant la fonction de freinage conférée pour un meilleur contrôle des déplacements de ladite luge.

A cet effet, l'invention propose une luge comprenant un matelas pneumatique présentant une paroi inférieure agencée pour permettre la glisse de ladite luge, une paroi supérieure agencée pour permettre l'assise sur elle d'au moins un utilisateur, et une paroi périphérique reliant lesdites parois inférieure et supérieure, ladite luge étant équipée d'au moins un système de freinage comprenant un levier formant un patin inférieur actionné par une poignée supérieure, ledit levier étant monté en rotation dans un boîtier entre une position inactive dans laquelle le patin est rétracté vers le boîtier et une position de freinage par tirage sur la poignée pour faire saillir ledit patin de la paroi inférieure, la paroi périphérique étant équipée d'un dispositif de fixation réversible du boîtier sur elle, ledit dispositif comprenant au moins une sangle qui est associée de façon amovible au boîtier entre une configuration de fixation par serrage dudit boîtier sur ladite paroi périphérique et une configuration de démontage dudit boîtier.

D'autres particularités et avantages de l'invention apparaîtront dans la description qui suit, faite en référence aux figures annexées, dans lesquelles :
[Fig.1],
[Fig.2] et
[Fig.3] représentent en perspective vue de dessus une luge gonflable selon un mode de réalisation de l'invention, respectivement vue de l'avant (figure 1), vue de l'arrière (figure 2) et en vue éclatée (figure 3) ;
[Fig.4] représente en vue de dessus la luge des figures précédentes,
[Fig.4a] étant une vue en coupe suivant le plan B-B de la figure 4 dans laquelle le levier de freinage n'est pas représenté ;
[Fig.5] représente un agrandissement partiel montrant le dispositif de fixation réversible du système de freinage des figures précédentes.

En relation avec ces figures, on décrit ci-dessous une luge gonflable, notamment destinée à la pratique d'une activité ludique, pour permettre à au moins un utilisateur de glisser sur un terrain neigeux.

La luge comprend un matelas pneumatique 1 présentant une paroi inférieure 2 agencée pour permettre la glisse de ladite luge, une paroi supérieure 3 agencée pour permettre l'assise sur elle d'au moins un utilisateur, et une paroi périphérique 4 reliant lesdites parois inférieure et supérieure.

Les parois inférieure 2 et supérieure 3 s'étendent toutes deux dans un plan horizontal respectivement inférieur et supérieur, la paroi périphérique 4 s'étendant en hauteur entre lesdits plans.

Dans le mode de réalisation représenté, le matelas pneumatique 1 comprend une vessie d'air 5, une coque inférieure 6 portant la paroi inférieure 2 et une coque supérieure 7 portant la paroi supérieure 3, lesdites coques étant associées en formant une paroi périphérique 4 délimitant avec lesdites parois supérieure et inférieure un espace 8 dans lequel la vessie 5 est disposée.

Les coques 6, 7 peuvent être réalisées en un matériau textile, par exemple en un tissu synthétique à base de polyester et/ou polyamide.

La luge comprend une toile 9 qui recouvre le dessous de la coque inférieure 6, ladite toile formant la paroi inférieure 2 de glisse de ladite luge. Pour ce faire, la toile 9 est réalisée en un matériau adapté, par exemple en toile cirée, et peut présenter en plus un réseau de motifs en creux et/ou en reliefs agencés pour faciliter sa glisse sur un terrain neigeux.

Dans la description, les termes de positionnement dans l'espace sont choisis par rapport à l'orientation de la luge telle que représentée sur les figures. Ainsi, les termes « supérieur » et « inférieur » sont pris relativement à une disposition respectivement éloignée et proche de la surface externe de la paroi inférieure 2 sur laquelle la luge glisse. Par ailleurs :
- le terme « longitudinal » se rapporte à une direction correspondant à la dimension maximale de la luge, le terme « transversal » se rapportant à une direction perpendiculaire à cette dimension maximale ;
- les termes « avant », « arrière », « gauche » et « droite » sont pris en référence au sens de déplacement de la luge lorsqu'elle glisse sur un terrain neigeux.

La coque supérieure 7 présente un orifice 11 dans lequel une valve de gonflage de la vessie 5 est accessible, ledit orifice étant formé sur un bord périphérique arrière de ladite coque supérieure.

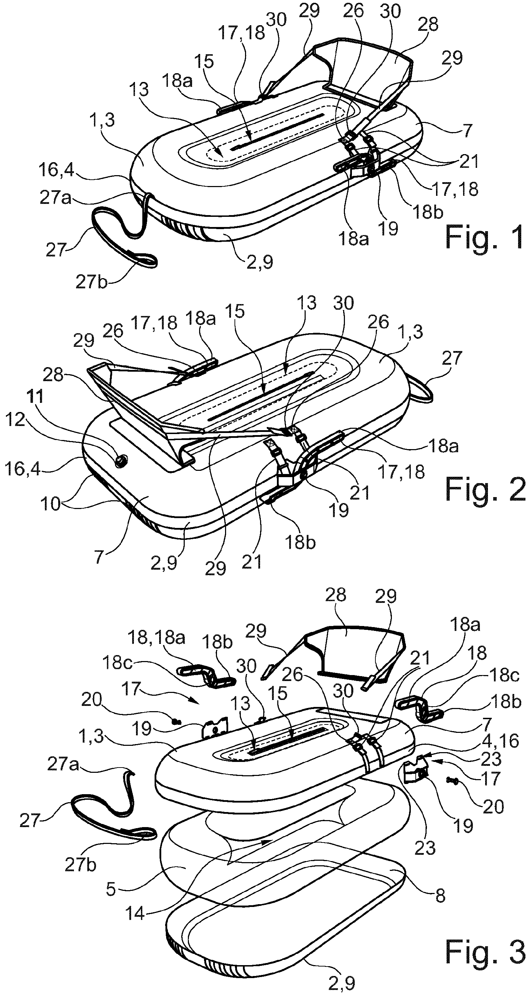

Comme représenté sur la figure 2, l'orifice est équipé d'un dispositif de fermeture réversible, par exemple sous la forme d'un capuchon vissable ou emboitable, afin d'occulter l'accès à la valve lorsqu'elle n'est pas utilisée. Cet agencement permet de protéger la valve contre les chocs qui peuvent l'endommager ou l'actionner de façon intempestive, notamment durant l'utilisation de la luge, mais aussi d'améliorer l'aspect esthétique de ladite luge.

De façon avantageuse, la paroi supérieure 3 présente une empreinte en creux 13, afin de former une zone d'assise pour améliorer le confort de l'(des) utilisateur(s) occupant la luge.

En particulier, l'empreinte en creux 13 peut s'étendre sur une partie importante de la paroi supérieure d'assise 3, de manière à permettre à un utilisateur adulte de s'y asseoir en allongeant ses jambes sur une portion avant de ladite empreinte.

Sur les figures, la vessie 5 est formée d'un boudin de géométrie torique dans lequel un logement 14 est formé, ledit boudin étant notamment réalisé en un matériau polymère, par exemple à base de polychlorure de vinyle (PVC) et/ou de polyuréthanne thermoplastique (TPU).

La paroi d'assise 3 s'étend au-dessus du logement 14, et peut présenter en outre une ouverture longitudinale 15 refermable, notamment au moyen d'un système de type fermeture éclair

L'utilisateur peut ainsi accéder au logement 14 par cette ouverture 15, afin de pouvoir y ranger ou en extraire du matériel tel que des articles vestimentaires de type gants et/ou bonnet, pour éviter leur perte lorsqu'ils ne sont pas utilisés, ou encore un appareil de gonflage manuel portatif, afin de pouvoir regonfler la luge si nécessaire au cours de son utilisation.

La paroi périphérique 4 de la luge s'étend sur un bord d'au moins une coque 6, 7. Dans le mode de réalisation représenté, les coques 6, 7 présentent chacune une bordure périphérique 6a, 7a, le matelas pneumatique 1 comprenant un bandeau 16 d'association desdites bordures pour former l'espace 8 dans lequel la vessie 5 est disposée.

En particulier, les bords supérieur 16a et inférieur 16b du bandeau 16 sont cousus sur respectivement une bordure périphérique 7a, 6a, et la paroi périphérique 4 s'étend sur ledit bandeau.

Le bandeau 16 peut être réalisé en un matériau textile différent de celui ou ceux constituant les coques 6, 7, notamment avec des couleurs et/ou des motifs différents, afin d'améliorer l'aspect esthétique de la luge.

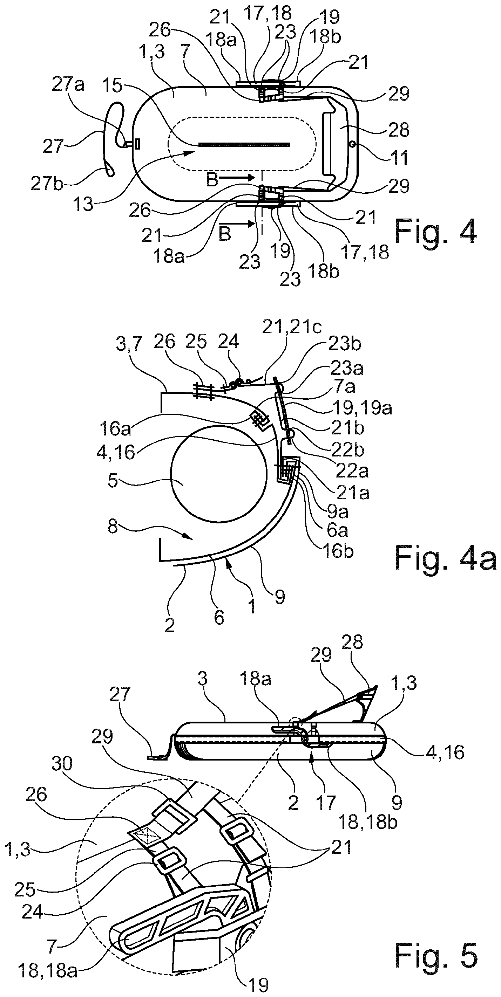

En relation avec la figure 4a, la toile 9 recouvre totalement la coque inférieure 6, et leurs bordures périphériques 9a, 6a respectives sont jointes par couture et repliées vers l'intérieur de l'espace 8 pour former un ourlet qui est disposé dans un ourlet extérieur formé par pliage du bord inférieur 16b du bandeau 16, l'ensemble étant ensuite solidarisé par au moins une couture.

De même, la bordure périphérique 7a de la coque supérieure 7 est pliée vers l'intérieur de l'espace 8 pour former un ourlet qui est disposé dans un ourlet extérieur formé par pliage du bord supérieur 16a du bandeau 16, l'ensemble étant ensuite solidarisé par au moins une couture.

Ces agencements permettent de renforcer l'association du bandeau 16 aux coques 6, 7 tout en dissimulant les ourlets de couture à l'intérieur du matelas 1, afin d'améliorer l'aspect esthétique de la luge.

Pour permettre à un utilisateur occupant la paroi d'assise 3 de contrôler ses déplacements, la luge est équipée d'au moins un système de freinage 17 comprenant un levier 18 formant un patin inférieur 18b actionné par une poignée supérieure 18a, ledit levier étant monté en rotation dans un boîtier 19 entre une position inactive, dans laquelle le patin 18b est rétracté vers le boîtier 19, et une position de freinage par tirage sur la poignée 18a pour faire saillir ledit patin de la paroi inférieure 2.

Le levier 18 est formé en une seule pièce, par exemple par moulage d'un matériau thermoplastique, et présente deux branches arquées supérieure et inférieure formant respectivement la poignée 18a et le patin 18b. Le levier 18 comprend en outre un alésage central 18c pour permettre son montage en rotation autour d'un axe horizontal 20 fixé dans le boîtier 19.

Le boîtier 19 peut également être formé en une seule pièce par moulage, ce qui permet de faciliter la fabrication du système de freinage 17.

La paroi périphérique 4 est équipée d'un dispositif de fixation réversible du boîtier 19 sur elle, ledit dispositif comprenant au moins une sangle 21 qui est associée de façon amovible au boîtier 19 entre une configuration de fixation par serrage dudit boîtier sur ladite paroi périphérique et une configuration de démontage dudit boîtier.

Cet agencement permet de faciliter la fabrication de la luge, et notamment du matelas pneumatique 1. Par ailleurs, la disposition du système de freinage 17 en périphérie du matelas 1 n'altère pas la paroi inférieure 2, ce qui permet d'améliorer la glisse de la luge, et permet également à l'utilisateur de le localiser et de l'actionner facilement, afin de pouvoir contrôler ses déplacements de manière simple et intuitive.

Sur les figures, la luge présente deux systèmes de freinage 17 de conception identique, dont les boîtiers 19 respectifs sont fixés à une portion respectivement gauche et droite de la paroi périphérique 4, lesdites portions centrales étant équipées chacune d'un dispositif de fixation réversible du boîtier 19 sur elle.

Ainsi, l'utilisateur peut actionner sélectivement ou simultanément l'un ou l'autre des leviers 18 pour pouvoir contrôler ses déplacements de façon plus précise. En particulier, les systèmes de freinage 17 sont disposés sur la partie arrière du matelas pneumatique 1, en des localisations proches des bras d'un utilisateur assis sur la paroi supérieure 3, ce qui permet de faciliter l'accès aux poignées 18 par ledit utilisateur.

Chaque dispositif de fixation comprend au moins une sangle 21 associée sur la paroi périphérique 4 pour être engagée dans le boîtier 19, ladite sangle étant serrable sur ladite paroi périphérique en configuration de fixation et dissociable du boîtier 19 en configuration de démontage. En particulier, cette réalisation permet de venir plaquer le boîtier 19 sur la paroi périphérique 4, ce qui améliore la stabilité du système vis-à-vis des efforts de freinage qu'il subit.

De façon avantageuse, chaque dispositif de fixation comprend deux sangles 21 qui sont espacées longitudinalement sur la paroi périphérique 4, chacune des sangles 21 étant engagée dans le boîtier 19. Ainsi, on limite les risques de pivotement du système de freinage 17 lors de son actionnement, de sorte à optimiser l'effort de freinage transmis par le levier 18.

Selon la réalisation représentée, chaque boîtier 19 comprend au moins deux fentes 22, 23 espacées longitudinalement, dans chacune desquelles une sangle 21 est engagée en coulissement. En particulier, chaque boîtier 19 comprend une paroi extérieure 19a qui présente deux jeux de fentes 22a, 22b, 23a, 23b espacés longitudinalement, chaque jeu comprenant une paire de fentes amont inférieure 22a et supérieure 22b et une paire de fentes aval inférieure 23a et supérieure 23b qui traversent ladite paroi, la sangle 21 coulissant sur ladite paroi extérieure entre lesdites paires de fentes amont 22a, 22b et aval 23a, 23b.

Chaque sangle 21 présente :
- un segment amont 21a fixé de façon permanente sur une première partie de la paroi périphérique 4, par exemple en étant fixé par couture dans l'ourlet inférieur 16b du bandeau 16, notamment conjointement avec les bordures périphériques 6a, 9a de la coque inférieure 6 et de la toile 9 ;
- un segment intermédiaire 21b engagé en coulissement dans le boîtier 19, notamment entre les deux paires de fentes 22a, 22b, 23a, 23b d'un jeu, de manière à coulisser sur la face intérieure de la paroi extérieure 19a ; et
- un segment aval 21c libre débouchant de la fente aval supérieure 23b dudit jeu, agencé pour venir s'engager de façon réversible dans un organe de fixation 24 solidaire d'une deuxième partie de ladite paroi périphérique, ledit organe permettant le réglage et l'immobilisation en longueur de ladite sangle pour assurer son serrage.

Cette réalisation permet d'améliorer la stabilité du système de freinage 17 dans la mesure où le segment 21b assure un plaquage optimal de la paroi 19a sur la paroi périphérique 4. Sur les figures, les fentes amont 22a, 22b et aval 23a, 23b d'un jeu sont sensiblement alignées verticalement, en étant formées en partie respectivement inférieure et supérieure de la paroi extérieure 19a du boîtier 19.

L'organe de fixation 24 est solidaire d'une partie supérieure de la paroi périphérique 4, notamment au niveau de la bordure périphérique 7a de la coque supérieure 7.

L'organe de fixation 24 comprend une boucle rigide de type « double D », le segment libre 21c étant monté coulissant dans un premier passant aval, puis dans le second passant amont de ladite boucle rigide, de manière à former une boucle de serrage que l'utilisateur peut manipuler, notamment en exerçant sur elle une traction pour effectuer le serrage du boîtier 19 sur la paroi périphérique 4.

L'organe de fixation 24 est associé à une extrémité d'une sangle 25, qui est pliée sur elle-même pour former une boucle fixée par couture dans le passant aval dudit organe, l'autre extrémité de ladite sangle étant fixée par couture sur un patch 26 de la paroi périphérique 4.

La luge peut être équipée d'au moins un accessoire choisi parmi une corde de tirage 27 et un dossier d'assise 28.

Sur les figures, le dossier d'assise 28 comprend deux sangles latérales 29 dont les extrémités libres respectives sont chacune associée à un organe d'accrochage 30, par exemple une boucle rigide de type « double D », lesdits organes étant fixés sur respectivement un patch 26 de la paroi périphérique 4.

Par ailleurs, la corde de tirage 27 comprend une première extrémité 27a qui est fixée à l'avant du matelas pneumatique 1, par exemple par couture dans un ourlet d'association du bandeau 16 à l'une des coques 6, 7, l'autre extrémité étant repliée sur elle-même pour former une boucle 27b que l'utilisateur peut saisir pour faire glisser la luge sur le sol par traction sur ladite corde.

## Revendications

1. Luge comprenant un matelas pneumatique (1) présentant une paroi inférieure (2) agencée pour permettre la glisse de ladite luge, une paroi supérieure (3) agencée pour permettre l'assise sur elle d'au moins un utilisateur, et une paroi périphérique (4) reliant lesdites parois inférieure et supérieure, ladite luge étant équipée d'au moins un système de freinage (17) comprenant un levier (18) formant un patin inférieur (18b) actionné par une poignée supérieure (18a), ledit levier étant monté en rotation dans un boîtier (19) entre une position inactive dans laquelle le patin (18b) est rétracté vers le boîtier (19) et une position de freinage par tirage sur la poignée (18a) pour faire saillir ledit patin de la paroi inférieure (2), ladite luge étant **caractérisée en ce que** la paroi périphérique (4) est équipée d'un dispositif de fixation réversible du boîtier (19) sur elle, ledit dispositif comprenant au moins une sangle (21) qui est associée de façon amovible au boîtier (19) entre une configuration de fixation par serrage dudit boîtier sur ladite paroi périphérique et une configuration de démontage dudit boîtier.

2. Luge selon la revendication 1, **caractérisée en ce qu'**elle présente deux systèmes de freinage (17) dont les boîtiers (19) sont fixés à une portion respectivement gauche et droite de la paroi périphérique (4), lesdites portions centrales étant équipées chacune d'un dispositif (21) de fixation réversible du boîtier (19) sur elle.

3. Luge selon l'une des revendications 1 ou 2, **caractérisée en ce que** la sangle (21) est associée sur la paroi périphérique (4) pour être engagée dans le boîtier (19), ladite sangle étant serrable sur ladite paroi périphérique en configuration de fixation et dissociable du boîtier (19) en configuration de démontage.

4. Luge selon la revendication 3, **caractérisée en ce que** le boîtier (19) présente au moins une fente (22a, 22b, 23a, 23b) dans laquelle la sangle (21) est engagée en coulissement.

5. Luge selon l'une des revendications 3 ou 4, **caractérisée en ce que** la sangle (21) présente un segment (21a) fixé de façon permanente sur une première partie (16) de la paroi périphérique (4), un segment intermédiaire (21b) engagé dans le boîtier (19) et un segment libre (21c) agencé pour venir s'engager de façon réversible dans un organe (24) de fixation qui est solidaire d'une deuxième partie de ladite paroi périphérique, ledit organe permettant le réglage et l'immobilisation en longueur de ladite sangle pour assurer son serrage.

6. Luge selon l'une la revendication 5, **caractérisée en ce que** l'organe de fixation (24) est associé à une extrémité d'une sangle (25), l'autre extrémité de ladite sangle étant fixée sur un patch (26) de la paroi périphérique (4).

7. Luge selon la revendication 6, **caractérisée en ce qu'**elle comprend un organe (30) d'accrochage d'un accessoire (28), ledit organe étant fixé sur le patch (26) de la paroi périphérique (4).

8. Luge selon l'une quelconque des revendications 1 à 7, **caractérisée en ce que** le dispositif de fixation comprend deux sangles (21) qui sont espacées longitudinalement sur la paroi périphérique (4).

9. Luge selon l'une quelconque des revendications 1 à 8, **caractérisée en ce que** le matelas pneumatique (1) comprend une vessie d'air (5), une coque inférieure (6) portant la paroi inférieure (2), et une coque supérieure (7) portant la paroi supérieure (3), lesdites coques étant associées en formant une paroi périphérique (4) délimitant avec les parois supérieure (3) et inférieure (2) un espace (8) dans lequel la vessie (5) est disposée.

10. Luge selon la revendication 9, **caractérisée en ce que** la paroi périphérique (4) s'étend sur un bord d'au moins une coque (6, 7).

11. Luge selon l'une des revendications 9 ou 10, **caractérisée en ce que** les coques (6, 7) présentent chacune une bordure périphérique (6a, 7a), le matelas pneumatique (1) comprenant un bandeau (16) d'association desdites bordures pour former l'espace (8) dans lequel la vessie (5) est disposée.

12. Luge selon la revendication 11, **caractérisée en ce que** la sangle (21) présente un segment (21a) fixé sur le bandeau (16).

13. Luge selon l'une quelconque des revendications 9 à 12, **caractérisée en ce qu'**elle comprend une toile (9) qui recouvre le dessous de la coque inférieure (6), ladite toile formant la paroi inférieure (2) agencée pour permettre la glisse de ladite luge.

14. Luge selon l'une quelconque des revendications 9 à 13, **caractérisée en ce que** la vessie (5) est formée d'un boudin de géométrie torique dans lequel un logement (14) est formé.

15. Luge selon l'une quelconque des revendications 1 à 14, **caractérisée en ce qu'**elle est équipée d'au moins un accessoire choisi parmi une corde de tirage (27) et un dossier d'assise (28).

## Patentansprüche

1. Schlitten, umfassend eine Luftmatratze (1), die eine untere Wand (2), die angeordnet ist, um das Gleiten des Schlittens zu ermöglichen, eine obere Wand (3), die angeordnet ist, um das Sitzen mindestens eines Benutzers auf ihr zu ermöglichen, und eine Umfangswand (4) aufweist, die die untere und die obere Wand verbindet, wobei der Schlitten mit mindestens einem Bremssystem (17) ausgestattet ist, das einen Hebel (18) umfasst, der eine untere Kufe (18b) bildet, die von einem oberen Griff (18a) betätigt wird, wobei der Hebel in einem Gehäuse (19) zwischen einer inaktiven Position, in der die Kufe (18b) zum Gehäuse (19) hin zurückgezogen ist, und einer Bremsposition durch Ziehen am Griff (18a) drehbar montiert ist, um die Kufe von der unteren Wand (2) vorstehen zu lassen, wobei der Schlitten **dadurch gekennzeichnet ist, dass** die Umfangswand (4) mit einer Vorrichtung zur reversiblen Befestigung des Gehäuses (19) an ihr ausgestattet ist, wobei die Vorrichtung mindestens einen Gurt (21) umfasst, der mit dem Gehäuse (19) zwischen einer Konfiguration durch Klemmbefestigung des Gehäuses auf der Umfangswand und einer Konfiguration zum Abnehmen des Gehäuses abnehmbar verbunden ist.

2. Schlitten nach Anspruch 1, **dadurch gekennzeichnet, dass** er zwei Bremssysteme (17) aufweist, deren Gehäuse (19) an einem linken bzw. rechten Abschnitt der Umfangswand (4) befestigt sind, wobei jeder der mittleren Abschnitte mit einer Vorrichtung (21) zur reversiblen Befestigung des Gehäuses (19) an ihnen ausgestattet sind.

3. Schlitten nach einem der Ansprüche 1 oder 2, **dadurch gekennzeichnet, dass** der Gurt (21) mit der Umfangswand (4) verbunden ist, um in das Gehäuse (19) eingeführt zu sein, wobei der Gurt in der Konfiguration zur Klemmbefestigung an der Umfangswand festklemmbar und in der Konfiguration zum Abnehmen vom Gehäuse (19) lösbar ist.

4. Schlitten nach Anspruch 3, **dadurch gekennzeichnet, dass** das Gehäuse (19) mindestens einen Schlitz (22a, 22b, 23a, 23b) aufweist, in den der Gurt (21 ) gleitend eingeführt ist.

5. Schlitten nach einem der Ansprüche 3 oder 4, **dadurch gekennzeichnet, dass** der Gurt (21 ) ein Segment (21a), das dauerhaft auf einem ersten Teil (16) der Umfangswand (4) befestigt ist, ein Zwischensegment (21b), das in das Gehäuse (19) eingreift, und ein freies Segment (21c) aufweist, das angeordnet ist, um dazu zu kommen, reversibel in ein Befestigungsorgan (24) einzugreifen, das fest mit einem zweiten Teil der Umfangswand verbunden ist, wobei das Organ die Einstellung und die Längsfixierung des Gurtes ermöglicht, um seine Klemmbefestigung zu gewährleisten.

6. Schlitten nach einem der Ansprüche 5, **dadurch gekennzeichnet, dass** das Befestigungsorgan (24) mit einem Ende eines Gurtes (25) verbunden ist, wobei das andere Ende des Gurtes an einem Patch (26) der Umfangswand (4) befestigt ist.

7. Schlitten nach Anspruch 6, **dadurch gekennzeichnet, dass** er ein Organ (30) zum Einhängen eines Zubehörs (28) umfasst, wobei das Organ an dem Patch (26) der Umfangswand (4) befestigt ist.

8. Schlitten nach einem der Ansprüche 1 bis 7, **dadurch gekennzeichnet, dass** die Vorrichtung zur Befestigung zwei Gurte (21) umfasst, die in Längsrichtung an der Umfangswand (4) im Abstand angeordnet sind.

9. Schlitten nach einem der Ansprüche 1 bis 8, **dadurch gekennzeichnet, dass** die Luftmatratze (1) eine Luftblase (5), eine untere Schale (6), die die untere Wand (2) trägt, und eine obere Schale (7) umfasst, die die obere Wand (3) trägt, wobei die Schalen miteinander verbunden sind, indem sie eine Umfangswand (4) bilden, die mit der oberen (3) und unteren (2) Wand einen Raum (8) begrenzt, in dem die Blase (5) angeordnet ist.

10. Schlitten nach Anspruch 9, **dadurch gekennzeichnet, dass** sich die Umfangswand (4) über einen Rand von mindestens einer Schale (6, 7) erstreckt.

11. Schlitten nach einem der Ansprüche 9 oder 10, **dadurch gekennzeichnet, dass** die Schalen (6, 7) jeweils einen Umfangsrand (6a, 7a) aufweisen, wobei die Luftmatratze (1) eine Bandleiste (16) zum Verbinden der Ränder umfasst, um den Raum (8) zu bilden, in dem die Blase (5) angeordnet ist.

12. Schlitten nach Anspruch 11, **dadurch gekennzeichnet, dass** der Gurt (21) ein Segment (21a) aufweist, das an der Bandleiste (16) befestigt ist.

13. Schlitten nach einem der Ansprüche 9 bis 12, **dadurch gekennzeichnet, dass** er ein Geflecht (9) umfasst, das die Unterseite der unteren Schale (6) bedeckt, wobei das Geflecht die untere Wand (2) bildet, die angeordnet ist, um das Gleiten des Schlittens zu ermöglichen.

14. Schlitten nach einem der Ansprüche 9 bis 13, **dadurch gekennzeichnet, dass** die Blase (5) aus einem Wulst mit torischer Geometrie gebildet ist, in dem eine Aufnahme (14) ausgebildet ist.

15. Schlitten nach einem der Ansprüche 1 bis 14, **dadurch gekennzeichnet, dass** er mit mindestens einem Zubehörteil ausgestattet ist, das aus einem Zugseil (27) und einer Sitzlehne (28) ausgewählt ist.

## Claims

1. Sledge comprising a pneumatic mattress (1) having a lower wall (2) arranged to allow said sledge to slide, an upper wall (3) arranged to allow at least one user to sit on it, and a peripheral wall (4) connecting said lower and upper walls, said sledge being equipped with at least one braking system (17) comprising a lever (18) forming a lower shoe (18b) actuated by an upper handle (18a), said lever being rotatably mounted in a casing (19) between an inactive position in which the shoe (18b) is retracted towards the casing (19) and a braking position by pulling on the handle (18a) to cause said shoe to project from the lower wall (2), said sledge being **characterized in that** the peripheral wall (4) is equipped with a device for reversibly securing the casing (19) thereto, said device comprising at least one strap (21) which is removably associated with the casing (19) between a configuration for clamping said casing to said peripheral wall and a configuration for disassembling said casing.

2. Sledge according to claim 1, **characterized in that** it has two braking systems (17) of which the casings (19) are secured to a respective left and right portion of the peripheral wall (4), said central portions each being equipped with a device (21) for reversibly securing the casing (19) thereto.

3. Sledge according to one of claims 1 or 2, **characterized in that** the strap (21) is associated with the peripheral wall (4) for engagement in the casing (19), said strap being clampable to said peripheral wall in the fastening configuration and releasable from the casing (19) in the disassembly configuration.

4. Sledge according to claim 3, **characterized in that** the casing (19) has at least one slot (22a, 22b, 23a, 23b) in which the strap (21) is slidingly engaged.

5. Sledge according to one of claims 3 or 4, **characterized in that** the strap (21) has a segment (21a) permanently fixed to a first part (16) of the peripheral wall (4), an intermediate segment (21b) engaged in the casing (19) and a free segment (21c) arranged to engage reversibly in a fixing member (24) which is connected with a second part of said peripheral wall, said member allowing adjustment and immobilization in length of said strap to ensure its tightening.

6. Sledge according to one of claims 5, **characterized in that** the fixing member (24) is associated with one end of a strap (25), the other end of said strap being fixed to a patch (26) of the peripheral wall (4).

7. Sledge according to claim 6, **characterized in that** it comprises a member (30) for attaching an accessory (28), said member being fixed to the patch (26) of the peripheral wall (4).

8. Sledge according to any one of claims 1 to 7, **characterized in that** the fastening device comprises two straps (21) which are spaced longitudinally on the peripheral wall (4).

9. Sledge according to any one of claims 1 to 8, **characterized in that** the pneumatic mattress (1) comprises an air bladder (5), a lower shell (6) carrying the lower wall (2), and an upper shell (7) carrying the upper wall (3), said shells being associated by forming a peripheral wall (4) that delimits with the upper (3) and lower (2) walls a space (8) in which the bladder (5) is disposed.

10. Sledge according to claim 9, **characterized in that** the peripheral wall (4) extends over an edge of at least one shell (6, 7).

11. Sledge according to one of claims 9 or 10, **characterized in that** the shells (6, 7) each have a peripheral edge (6a, 7a), the pneumatic mattress (1) comprising a band (16) associating said edges to form the space (8) in which the bladder (5) is arranged.

12. Sledge according to claim 11, **characterized in that** the strap (21) has a segment (21a) fixed to the band (16).

13. Sledge according to any one of claims 9 to 12, **characterized in that** it comprises a canvas (9) which covers the underside of the lower shell (6), said canvas forming the lower wall (2) arranged to allow said sledge to slide.

14. Sledge according to any one of claims 9 to 13, **characterized in that** the bladder (5) is formed by a tube with toroidal geometry in which a housing (14) is formed.

15. Sledge according to any one of claims 1 to 14, **characterized in that** it is equipped with at least one accessory chosen from a pull cord (27) and a seat back (28).
